# EUROPEAN PATENT SPECIFICATION

(11) **EP 2 945 984 B1**
(45) Date of publication and mention of the grant of the patent: **21.12.2016**
(21) Application number: 14717214.2
(22) Date of filing: 16.01.2014
(51) Int. Cl.: C08K 3/34, C09D 167/02, C08L 67/02, C09D 7/12

(54) **MOULDABLE PLASTIC COATING**
FORMBARE KUNSTSTOFFBESCHICHTUNG
REVÊTEMENT PLASTIQUE APTE AU MOULAGE

(30) Priority: 16.01.2013 IT RM20130024
(43) Date of publication of application: 25.11.2015
(73) Proprietor: Loggia Industria Vernici S.r.l., 04016 Borgo S. Donato Sabaudia (LT) (IT)
(72) Inventor: ZUFFRANIERI, Fabrizio, I-04016 Borgo S. Donao Sabaudia (IT)
(74) Representative: Santi, Filippo
(86) International application number: PCT/IT2014/000015
(87) International publication number: WO 2014/111965

(56) References cited:
- EP-A1- 0 780 340
- WO-A1-99/03914
- US-A1- 2012 208 034
- US-B1- 6 861 128
- PISCITELLI F ET AL: "Sodium montmorillonite silylation: Unexpected effect of the aminosilane chain length", JOURNAL OF COLLOID AND INTERFACE SCIENCE, ACADEMIC PRESS, NEW YORK, NY, US, vol. 351, no. 1, 1 August 2010 (2010-08-01), pages 108-115, XP027300878, ISSN: 0021-9797 [retrieved on 2010-08-01]

## Description

The present invention concerns a mouldable plastic coating.

More specifically the invention relates to a mouldable plastic coating for interiors, which can take on different types of effect depending on how it is processed, based on a nanocomposite material with polymeric matrix.

As is well known, a typical problem of the mouldable plastic coating is inherent in the poor ability of these coatings to withstand the stresses. In particular, this makes it impossible to manufacture mouldable coatings which can assume finishes with three-dimensional structure and at the same time can withstand the stresses typical, for example, of a paving.

By contrast, synthetic pavings, for performances being equal with those of the traditional pavings, like ceramic, wood, etc., have significantly lower costs, in the vicinity of 50%, making it particularly desirable to be able to develop a coating for paving involving low costs with good features of resistance to stress.

As is also well known, a composite material is the combination, on a macroscopic scale, of two or more distinct and insoluble materials having significantly different physical and mechanical properties and between which it is possible to identify a surface of interface. The composite materials are generally designed to achieve a particular balance of various properties, in a given range of applications. It is not easy to give a simple and unambiguous definition of composite material, given the large number of materials that can be considered as such and the broad spectrum of application areas within which they can be developed.

However, as a practical definition commonly accepted, the word "composite" refers to those materials containing a continuous phase (matrix), which binds together an array of fillers, being more rigid and resistant (discontinuous phase), protecting the shape. The obtained composite has features that are closely related to the properties of the individual constituting phases, as well as to their shape, size, concentration, distribution, orientation, in addition to the possible interaction. In particular, as far as the relationship of the resulting property with the properties of the individual constituents is concerned, many properties of the composite in principle are obtained by weighted average (by volume or weight), although in the presence of phenomena of interaction or synergism the properties of the composite can be different (interaction) or even higher (synergism) than those of each component.

In the field of composite materials, are of particular interest in the application the composite materials with polymeric matrix. Polymeric materials, in fact, whether thermoplastic or thermosetting, are commonly admixed with different types of fillers, for many different purposes. In any way all of these purposes are attributable to the general purpose of obtaining improvements in some specific properties while retaining the lightness and flexibility that are typical of polymers.

The main properties that can be improved through the implementation of composite materials are:
- stiffness, which, if it is sufficiently high, as in the case referred to the present invention, allows to replace structural parts of pavings with polymeric composites, much more lightweight, easy to produce industrially and cheap;
- resistance to chemicals such as acids, bases, lubricant oils and weathering, which is often quite limited for polymers due to the high permeability that these materials show towards small molecules;
- abrasion resistance;
- impact resistance.

Many types of fillers also show a good thermal and electrical conductivity, a thermal expansion coefficient lower than that of the matrix and a good wear resistance. So, the design of a composite material is not simply aimed at the realization of a system in which the properties listed above are improved, but also allows to obtain materials with specific functional properties.

One of the methods used in the design of a composite material refers to the type and shape of the filler being used. According to this method, the fillers are generally distinguished by virtue of their shape or more precisely of their "aspect ratio", defined as the ratio between the larger and the smaller dimension. The aspect ratio varies from 1, for spherical fillers, to values also > 100 as for some types of synthetic fibers.

According to this classification, two families of composites are identified: particulate and fiber-reinforced (in turn divided between short fibers and long fibers and laminated).

In the particulate composite the dispersed particles generally have the purpose of improving the wear resistance, surface hardness, workability, resistance to high temperatures, thermal expansion, etc.. The composites with particles are characterized by mechanical strength and/or stiffness well below that of the fibrous composites. The presence of even very durable particles, in fact, usually does not cause significant improvements of the mechanical characteristics of the composite, as is the case for fibrous composites, in which almost all of the external load is borne by the fibers. Similarly, in case of the behavior at break, rigid particles do not contribute generally to stop the propagation of any cracks and defects as occurs in fibrous composites.

A positive effect is observed only in the particular case of composite with rubber particles, which are responsible for a significant improvement in the toughness of the material.

The presence of hard particles in a brittle matrix causes inevitable phenomenon of stress concentration which may give rise to a reduction of the mechanical strength of the composite compared to the simple matrix.

So, with a brittle matrix, ductile particles must be used in order to obtain both a high resistance and preserve and/or enhance the deformability, while with a ductile matrix, rigid and brittle fillers are preferred, to increase the resistance, at the same time maintaining toughness.

The resulting properties, as always for the composites vary with the percentage of matrix and filler, as well as the interactions between the phases.

The fiber reinforced composites are by far the most widely used. The success of these composites is linked to the high strength/weight ratio (specific resistance) and to the high rigidity/weight ratio (specific modulus) of the fibers, as well as to the possibility to vary the degree of anisotropy by intervening, for example, on the concentration and on the orientation of the filler.

The high specific strength of fibrous composites is essentially linked to the high fiber strength and to the low weight of the fibers and the matrix.

In fibrous composites, the increase of the resistance to fracture is particularly interesting. During the propagation of the fracture, in the composite energy can be absorbed according to four mechanisms:
1) the deviation of the crack from its direction;
2) the reduction of the deformation at the crack because of the action of the filler of the fiber;
3) pull-out and/or fiber breakage as a result of crack growth;
4) stretching of the fibers that are still connected to the matrix after the growth of the crack.

If the fiber-matrix bond is weak, the crack can propagate through the fiber-matrix interface, thus bypassing the fiber. This deviation results in an increase of energy consumption compared to the energy involved in the propagation of the fracture in a material without filler. Also, if the fibers are weakly bound to the matrix, phenomena of pull-out (extraction) can be triggered.

If, instead, the fibers are strongly bound to the matrix, the crack will propagate only through the fiber, without deviating its path, but in this case the rate of energy absorbed by the deviation of the route is lost.

So as it is lost the rate of energy due to the pull-out of the fibers, but, on the other hand, a greater absorption of energy is present for the deformation and breakage of the fibers that are bound to the matrix.

The firous composites may occur in a single sheets configuration (single-layer) or in multiple overlapping sheets variously oriented, defining, in this case, the laminates (multi-layer, angle-ply).

Regarding the geometry of the fibers, there are two categories of fibrous composites: long-fiber (or continuous) and short-fiber (or discontinuous).

In composites with long fibers, the component of the load in the direction of the fibers is almost entirely borne by the fibers and it is possible to assume, in practice, that the load is directly applied to the fibers. The main function of the matrix is then to hold the fibers together and distribute the load. The resistance and, especially, the breaking mode of these composites are therefore strongly related to the characteristics and orientation of the fibers.

In short fiber composites (diameter between 1 and 10 µm, length between 10 and 100 times the diameter), the fibers may be arranged randomly (dispersed) or oriented in preferential directions. The dispersed short fiber composites, such as the particulate composites, are isotropic. On the contrary, those with aligned fibers are anisotropic, and in particular are often orthotropic, ie have two directions of preferential orientation, which are orthogonal between them.

The type and the dispersion of the fillers influence in various ways the properties of the composite.

As already mentioned, the orientation of the discontinuous phase (filler) affects the isotropy of the composite. If the discontinuous phase is distributed randomly, the composite has in practice an isotropic behavior, ie exhibits macroscopic physical-mechanical properties independent of direction. This is, for example, the case of composites with filler constituted by more or less regular spherical particles or short fibers randomly distributed.

If instead the discontinuous phase has a fixed orientation, then the composite exhibits an anisotropic behavior, being the physical-mechanical properties dependent on the direction considered.

It is also known that nanotechnology represents a new scientific and technological approach aiming to control the fundamental structure and behavior of matter at the atomic and molecular level, defining a radical change in the field of materials.

Using nanotechnology, materials and products are obtained with characteristics significantly improved or completely new since, at the nanoscale, the nontraditional properties and behavior of matter offer the opportunity to obtain structures and devices that operate and are used in a radically different manner than those with larger sizes.

The interest of the scientific community and the industrial sector for this type of material is that the material produced with nanotechnology (nanostructured) have properties completely different from the conventional same material.

Thus, nanotechnology represents an unprecedented leap in the development of materials. The added value of nanotechnology is the possibility they offer to modify the properties of materials by adapting to the technological requirements of various application areas.

So what differentiates a nanocomposite material from a conventional composite material lies in the size of the charge, and it is this feature that makes interesting this kind of materials.

In fact, the size of the nano-fillers are responsible for a high ratio of surface area and volume, resulting in a prevalence of the characteristics of the surface atoms on those of the internal atoms, which is why some of the properties of nanomaterials are affected by the laws of atomic physics rather than the behavior of the material together.

The increase of the properties in nanostructured systems depends not so much by the synergistic interaction of filler-matrix, considered in the composites of the traditional type, but rather in what is typically called "nanoeffect" and that is the huge contact area of matrix/filler that is to generate when the fillers reach nanoscale dimensions.

This cause the formation of a very extended area of interface between the continuous and discontinuous phases, called interphase, the thickness of which varies between 2 and about 50nm. The material at the interface, therefore, can represent up to 50% of the volume of the entire material. The interface controls the extent of interaction between the filler and the polymer, determining the final properties of the composite.

It follows immediately that the major difficulty in the development of nanocomposite materials is to control and modulate the interfacial region. In it, the mobility of the polymer chains, the stiffness, the crystallinity, and other properties are altered, with important consequences on the global behavior of the material.

In order to improve, therefore, the properties of nanocomposites, it is essential to define a process of knowledge and control of the distribution of the filler, of its dispersion and of the interface matrix/filler.

These processes may be different depending on the type of polymeric matrix or filler that is considered, but, in any case, for the preparation of nanocomposite materials, the key requirement lies in the so-called "principle of heterogeneity" or "nanoheterogeneity": namely, the nanoparticles must be individually dispersed in the polymeric matrix, so that the heterogeneous nature of the material is present only at nanoscale level.

In theory, each nano-particle should contribute equally to the overall properties of the composite.

The high surface energy and the polar nature of nanofillers normally require the development of appropriate synthetic approaches that take into account the importance of the above-mentioned principle of nanoheterogeneity. Such approaches, in addition to identifying the most appropriate technology for the preparation, must necessarily consider the development of strategies of compatibilization between the continuous phase, organic, and the nanofiller, in order to reduce the interfacial tension and prevent the phenomena of agglomeration of the nanofillers.

Clearly, the choice of the most appropriate strategy is strongly conditioned by the nature of the filler, ie by its surface chemistry, as well as by the type and the functionality of the polymeric matrix.

In general, the methods of compatibilization can be summarized in the surface modification of nanofillers, in the modification of the polymer (insertion of polar groups in the chain or as terminals) and finally the addition of a third phase, called coupling agent, in the course of mixing.

On the contrary, as far as the synthetic approach is concerned, because of the multiplicity of polymer matrices and of the fillers, as well as the physical and chemical differences of the systems, it is not possible to arrive at a universal technique of preparation of the nanocomposites. In fact, each polymeric matrix has peculiar characteristics that require different processing conditions and, in general, different strategies of preparation lead to different results.

In this context it is included the solution according to the present invention, which aims to provide a nanocomposite material for the realization of a plastic spreadable coating for interior, which can take on different types of effect depending on how it is processed, formulated with special synthetic binders and additives to make it water repellent and highly resistant to stresses once dry.

These and other results are obtained according to the present invention by proposing a mouldable plastic coating based on a nanocomposite material, the structures of which represent a new class of composite materials, constituted by a polymeric matrix (continuous phase) within which a filler is dispersed with at least one of its characteristic dimensions in the order of nanometers (1 nm = 10⁻⁹m).

Purpose of the present invention is therefore to provide a mouldable plastic coating that allows to overcome the limits of the solutions according to the prior art and to obtain the technical results previously described.

Further object of the invention is that said mouldable plastic coating can be achieved with substantially contained costs, both as regards production costs and as regards the management costs.

Another object of the invention is to provide a mouldable plastic coating that is substantially simple to obtain, safe and reliable.

It is therefore a specific object of the present invention a process for the manufacturing of a mouldable plastic coating, which provides a step of mixing of a polymeric matrix selected from polybutylene terephthalate (PBT) and polyethylene terephthalate (PET) together with a filler constituted by layered silicate with application of a shear stress wherein, after said step of mixing said polymeric matrix with said filler constituted by layered silicate, the obtained mixture is dispersed in Milli-Q water at a concentration of about 0,1% by weight; under vigorous stirring are added to the mixture synthetic quaternary ammonium salt (0,03% by weight) and synthetic resin of acrylic nature (20% by weight); the suspension is kept under stirring for 15' and completed with a mixture of mineral pigments 10-15% by weight.

Preferably, according to the invention, said shear stress is applied by a processing of the type of melt processing, more preferably by using an extruder.

It is evident the effectiveness of the plastic spreadable coating of the present invention, that, by virtue of its characteristics, allows to realize the internal finish of old and modern buildings, shops, luxury hotels at which it is desired to give decorative elegance and originality, both in the wall and on the floor.

The invention will be described below for illustrative, but not limitative purposes, with particular reference to some illustrative examples.

The mouldable plastic coating according to the present invention, specifically developed for the decoration of interiors, is formulated with special synthetic binders and additives to make it a water repellent product and highly resistant to stresses once dry. Once applied a layer of water protective varnish (1 K acrylic or polyurethanic for low or medium strength, 2K epoxydic for high resistance), the mouldable plastic coating according to the present invention is perfectly resistant to foot traffic. When the finish is completed it can take many different types of effect, depending on the instrument used to knead. Therefore it will be possible to have faux leather effect, faux wood effect, marble effect, striped effect, in addition to a glossy multitone effect.

The mouldable plastic coating according to the present invention has been obtained starting from the extensive and thorough analysis of physico-chemical properties of a polymer-layered silicate nanocomposite, prepared by the technology known with the name of the melt compounding, which provides for the direct intercalation into the silicate of the polymer in the molten state in shear mixing devices.

In particular, the effects of the composition of the system have been studied (type of matrix, type of silicate, percentage of silicate), and those of the preparation conditions (extrusion speed) on the morphology and on the characteristics of the final systems.

More particularly, a study has been conducted of nanocomposites based on thermoplastic polyester matrix (polybutylene terephthalate (PBT) and polyethylene terephthalate (PET)) loaded with low levels by weight of modified silicate (or clay).

Unlike what happens with other polymer matrices, in the literature are not available significant data on the melt compounding of polyester matrices.

Despite being polymers characterized by a remarkable diffusion on the market in various fields of application, the processing of these materials presents several obstacles, attributable mainly to the phenomena of degradation of the matrix, probably generated by reactions with organic modifiers of the clay with moisture. Such degradation, which takes place at the high process temperatures characterizing these polymers (>250°C), lowers substantially the molecular weight of polyesters, leading to a final product with deteriorate characteristics with respect to the pure matrix, even in the presence of intercalation and exfoliation of the silicate.

The nanocomposite with polymeric matrix and filler constituted by layered silicates (polymer-layered silicate nanocomposites (PLSN)) can be made using several techniques, distinguishable substantially between those which involve an in situ polymerization, those involving an intercalation mediated by solvents and those implemented through a direct intercalation in the silicate of the polymer in the molten state in shear mixing devices.

The last category includes the processes defined melt compounding, the closest to traditional technologies as far as the addition of the filler is concerned in the field of polymeric composites.

Once a sufficient mobility is reached and in the presence of an adequate level of affinity between polymer and organoclay, the polymer chains diffuse into the interlayers.

The structure of equilibrium is dependent on the nature of the polymer (polar or apolar), on the cation exchange capacity of the silicate and on the structure and chain length of the cationic surfactant employed.

In the model in question, the outcome of the intercalation is regulated by the interaction of concomitant entropic and enthalpic factors.

Although the penetration of the polymer in the interlayers leads to a reduction in overall entropy of the macromolecular chains, this reduction can be compensated by the increase of configurational freedom of the organic chains of the surfactants bound to the surface of the layers as the layers move away separating during intercalation.

The process of direct intercalation from the molten polymer can be facilitated by contribution of a shear stress within a mixing device. It has been found that the level of dispersion on nanoscale obtained by processing polymer and organo-modified clay in an extruder is significantly higher than that obtainable at rest.

Different types of shear devices have been used (extruder, mixer, ultrasound waves amplifier).

As will be explained below, if the process parameters are chosen in an appropriate manner, the combined effect of shear and a good affinity between polymer and organo-clay leads to hybrid PLSN with properties comparable to those obtained by the more expensive and laborious in situ techniques, at the same time with significant advantages in production.

In fact melt processing is environmentally sustainable, since it is not required the use of solvents; the production mechanism is moved downstream (the starting materials are polymer granules and organo-clays commercially available), providing manufacturers numerous degrees of freedom in order to obtain the desired specifications in the product (for example choice of the polymer, nano-clays, amount of filler, etc.); at the same time, melt processing minimizes costs due to its compatibility with already existing processes.

The results obtained in the melt compounding show that at the current level of knowledge it is not possible not to make extensive experimental investigations targeted to every single polymer-clay system.

The mechanism of exfoliation of silicate crystals during melt compounding of nanocomposites, with particular reference to the role played by the shear in the process, proceeds in stages, as listed below:
1) disgregation of the grain of clay;
2) disintegration of the tactoid (sandwich structure typical of silicate crystals);
3) exfoliation by means of a peeling of the individual layers.

Initially, the effort leads to disruption of the grains of organo-clay, giving rise to a dispersion of tactoids of silicate layers.

Further downstream in the extruder, the transfer of effort from the molten polymer to tactoids of silicate causes them to separate in smaller sized crystallites.

Finally, the individual layers are exfoliated by means of the combined effect of shear and diffusion of the polymer chains in the interlayer.

Experimental evidence has shown that, in the absence of good affinity between the polymeric matrix and the silicate, the exfoliation can not take place whatever the level of shear in the process.

The organic modification reduces the forces of cohesion between the layers, so that the intercalation of the polymer can more easily take place during the process.

Only a limited number of polymer matrices can intercalate in natural silicates and, in any case, only a low level of exfoliation can be obtained in these cases.

The polymer matrices used to develop the rheological system that forms the mouldable plastic coating according to the present invention are polybutylene terephthalate (PBT) and polyethylene terephthalate (PET).

PTB used in the final formulation has technical characteristics summarized in the following Table 1:

**Table 1**

| | Test Conditions | Unit | Standard | Value |
|---|---|---|---|---|
| Modulus of elasticity | 1 mm/min | MPa | ISO527-1,-2 | 2600 |
| Yield Stress | 50 mm/min | MPa | ISO527-1,-2 | 55 |
| Yield Strain | 50 mm/min | % | ISO527-1,-2 | 4 |
| Flexural modulus | 2 mm/min | MPa | ISO 178 | 2200 |
| Resistance to flexion | 2 mm/min | MPa | ISO 178 | 90 |
| Strain at break | 2 mm/min | % | ISO 178 | 6 |
| Melting temperature | 10°C/min | °C | ISO11357-1, -3 | 225 |
| Water Absorption | Saturation in water at 23 °C | % | ISO 62 | 0, 5 |
| Density | - | kg/m³ | ISO 1183 | 1300 |

whereas PET selected for the purposes of the invention has the characteristics summarized in the following table 2:

**Table 2**

| | Unit | Value | Standard dev |
|---|---|---|---|
| Intrinsic viscosity | dl/g | 1,25 | ±0,100 |
| Crystalline density | g/ml | 1,4 | ±0,1 |
| Melt Flow Index | g/10min | 14,5 | ±3,0 |
| Melting temperature | °C | 257 | ±2 |
| Density | kg/m³ | 880 | ±5% |

The clay used to develop the system is a sodium montmorillonite, with a cation exchange capacity of 92,6 meq/100g of clay and with a d-spacing of 11,7Å.

In order to improve the adhesion between the clay and the matrix of interest, it was provided for a multi-functionalization of the surface of sodium montmorillonite with various organic compounds.

In a first phase, based on the diffusion of organic molecules within the platelets, a precursor of polymerization of polyethylene terephthalate has been used, bis-(2-hydroxyethyl) terephthalate (BHET). BHET is a monomer obtained through reaction of esterification between ethylene glycol and dimethyl terephthalate and appears like a white powder with a melting temperature between 106 and 109°C.

The second class of organic compatibilizers used for the preparation of organomodified clays is that of aminosilanes.

In this case, the functionalization of montmorillonite involves the reaction of the hydroxyl groups present on the surface with the reactive groups of aminosilane. The compounds used in the experimental tests of the present invention are two aminosilanes which differ in the length of the chain and for the presence of one or more amino groups.

The extrusion processes are conducted through the use of an extruder, device that essentially allows to mix, melt and pressurize thermoplastic polymers.

The formulation for the mouldable plastic coating according to the present invention was produced with a single screw extruder.

A single screw extruder is constituted by a screw that rotates with very precise coupling within a heatable cylinder, called barrel. The material to be extruded, which is put into the extruder through a hopper in the form of granules, powder or flakes, is located between the core of the screw and the cylinder, by varying the diameters of the latters along the axis of the extruder,a pressure gradient is established which advances the fluid mass.

The feed zone has the only purpose of preheating the material and of conveying it towards the subsequent zones. In the compression zone the degassing of the polymer occurs, then the elimination of the gas trapped between the granules, and their further heating by contact with the heated barrel. In this zone, the screw has a variable diameter, while its profile should be optimized depending on the material to be processed. In the last part, the extruder has a function as a pump. In this area, the depth of the channel is constant, and has the function to homogenize the melt, feeding the extruder head.

The main process parameters on which it is possible to intervene are the number of revolutions, the engine power and the temperature profile within the various zones of the extruder.

The engine power being set, together with the number of revolutions per minute (rpm) of the screw, the values of the pressure in the barrel and the speed with which the polymer moves are known; the geometry being established, higher screw speed are equivalent to greater efforts transferred to the material and to a lower residence time within the extruder.

As regards the choice of the right profile of temperatures, from considerations relating to the flow, it is realized a growing profile of temperatures for the melt phase, so as to reduce the return flow and the pressure losses in the head. In addition, account has been taken of the substantial increases in temperature due to heat generated by friction and by the high pressures in the barrel.

### Example 1. Functionalization of sodium montmorillonite with the monomer BHET

The surface modification of sodium montmorillonite with the monomer BHET was conducted according to the following procedure.

An aqueous suspension of clay was prepared with mineral title varying between 2,5 and 4,5% by weight.

BHET was solubilized in an alcoholic mixture of isopropanol/MeOH/EtOH obtaining a solution of BHET with title weight of about 5%.

The two mixtures were put under vigorous magnetic stirring, first separately at 50-70°C for about 45 min and then togheter at 60-80°C for about 5h.

The solvent (purified water, and the mixture isopropanol alcohol/methanol/ethanol) was extracted under vacuum through rotovapor at 85 °C for 4h.

The material being retrieved, this was put in a stove at 250°C for 2h under vacuum in order to facilitate a partial condensation of BHET between the lamellae of the clay.

In order to evaluate the effect of the amount of modifier added to the clay on increasing interlamellar distance.

### Example 2. Functionalization of sodium montmorillonite with aminosilane

To modify the montmorillonite with the aminosilane a suspension of clay and glycerol was prepared and put under stirring at 80°C for 45 min under a nitrogen flow.

The same procedure was used to dissolve the aminosilane in the same solvent.

Subsequently, the solution with aminosilane was added to the dispersion of the clay and the mixture was put under stirring for 3h at 100°C.

The product was filtered and treated in an oven at 100°C for 5h.

The clay thus functionalised with aminosilane, was washed three times with Milli-Q water and treated with ultrasonicator for 10 min, and finally dried under vacuum at 90 °C for 3h.

### Example 3. Functionalization of sodium montmorillonite with the monomer PBT

The extrusion of the mixture based on polybutylene terephthalate were conducted using an extruder, setting the rotation speed of between 50 and 70 rpm working with a concentration of organically modified filler equal to 3-4% by weight.

The mechanical properties of the nanocomposite were examined through dynamic-mechanical analysis, flexural test and impact test.

The former have allowed to evaluate the value of the elastic modulus and the glass transition temperature and confirm that the presence of an inorganic phase dispersed within the polymeric matrix has determined an increase of the elastic modulus and of the glass transition temperature.

From the results obtained from impact tests performed on samples, it is clear that the increase in content of compatibilizing agent results in a reduction of the properties of breaking with a well defined trend.

### Example 4. Preparation of mouldable plastic coating

The rheological agent obtained according to the procedure described above, was then dispersed in Milli-Q water at a concentration of approximately 0,1%; under vigorous stirring a synthetic salt of quaternary ammonium (about 0,03%) and a synthetic resin of acrylic natures (about 20%) were added to the mixture, the suspension was kept under stirring for 15min and completed with a mixture of mineral pigments 10-15%.

The product thus obtained presents itself as a viscous fluid suitable to be used as a decorative mouldable plastic coating for internals, which can take endless types of effect depending on how it is worked.

### Example 5. Application of mouldable plastic coating

The mouldable plastic coating according to the present invention can be applied using a stainless steel spatula, a trowel, rollers and dedicated decorative tools, brushes, diluted between 10 and 20% with water to depending on the effect which was decide to accomplish.

The mouldable plastic coating according to the present invention has a drying time of 4-6 hours at 20 °C and at normal rate of humidity, can be polished 24 hours after its application and is dry in depth after 48 hours.

Before the application of the mouldable plastic coating according to the present invention a proper preparation of the surface to be coated is necessary, by means of powder or paste plaster (type FLYSTUK, produced by Loggia Industria Vernici, Latina, Italy), then trimmed with abrasive paper (recommend a grain type P120) after about 12 hours of the end of the application. Then, proceeding to the possible elimination of dirt and dust, it is necessary to apply a coat of acrylic fixative (type FISSACRIL, produced by Loggia Industria Vernici, Latina, Italy), diluted with water in the ratio 1:1/1:3. After 4-5 hours of application of fixative, it is necessary to apply by means of a roll, one or two coats of primer (three types: Universal Brown Primer, Universal Grey Primer, Universal White Primer all of Loggia Industria Vernici of Latina, Italy).

The application of the mouldable plastic coating according to the present invention provides for laying the product by means of a brush in a single coat and even the surface smoothing it with a steel trowel; knead immediately after with the chosen decorative tool (decor roller, tool for faux wood, sponge, as described in the following examples).

The mouldable plastic coating according to the present invention has a yield of 3-5 m²/kg.

The tools used for kneading or laying the mouldable plastic coating according to the present invention can be washed with water.

Moreover, the mouldable plastic coating according to the present invention is free of solvents and toxic substances.

### Example 6. Application of mouldable plastic coating with crocodile skin effect

### Dilution: 5-10% with water

Application: the product has been laid with plafoncino brush 3x7 cm/3x10 cm and stroked with plastic American flat brush, making it smooth. With a suitable roller the figure false crocodile skin was thereafter printed.

For the polishing with cloth or electric polisher it is necessary to wait at least 24 hours after application. The product can be further protected with a dedicated glaze (selected among: 1 k acrylic, with good resistance to foot traffic of moderate intensity; 1 k polyurethane with good resistance to high-intensity foot traffic; 2k epoxy with excellent resistance to mechanical and chemical stresses)

### Example 7. Application of mouldable plastic coating with effect of snake skin

### Dilution: 10% with water.

Application: the product has been laid with plafoncino brush 3x7cm/3x10cm and stroked with plastic American flat brush making it smooth. The figure false skin was printed with a special roller.

For the polishing with a cloth or with electric polisher it is necessary to wait at least 24 hours. The product can be further protected with a dedicated overglaze (see example 4).

### Example 8. Application of mouldable plastic coating with wood effect

### Dilution: 20-25% with water.

Application: the product has been applied with plafoncino brush 3x7cm/3x10cm on the surface to be decorated and was subsequently stroked with faux wood rubber pad, tilting it in dependence of the desired effect.

For the polishing with cloth or electric polisher it is necessary to wait at least 24 hours. The product can be further protected with a dedicated overglaze (see example 4).

### Example 9. Application of mouldable plastic coating effect dithered

### Dilution: 20% with water.

Application: the product has been laid with plafoncino brush 3x7cm/3x10cm and trimmed with american flat brush to make it smooth plastic, then with a special roller the imitation leather figure was printed.

For the polishing with cloth or electric polisher is the need to w ait at least 24 hours. The product can be further protected with a dedicated overglaze (see example 4).

### Example 10. Application of mouldable plastic coating with marble effect

### Dilution: 5% with water.

Application: the product has been laid with an American flat brush. It is not necessary to smooth it after laying. A dedicated buffer has been passed all over its surface.

For the polishing with cloth or electric polisher it is necessary to wait at least 24 hours. The product can be further protected with a dedicated overglaze (see example 4).

### Example 11. Application of mouldable plastic coating with granite effect

### Dilution: 5-10% with water.

Application: the product has been laid on with an American flat brush. It is not necessary to smooth it after laying. A dedicated buffer has been passed on the whole surface.

For the polishing with cloth or electric polisher it is necessary to wait at least 24 hours. The product can be further protected with a dedicated overglaze (see example 4).

The present invention has been described for illustrative but not limitative purposes, according to its preferred embodiments, but it is understood that variations and/or modifications may be made by those skilled in the art without departing from the relevant scope of protection, as defined by the appended claims.

## Claims

1. Process for the manufacturing of a mouldable plastic coating, **characterised in that** it provides for a step of mixing of a polymeric matrix selected from polybutylene terephthalate (PBT) and polyethylene terephthalate (PET) together with a filler constituted by layered silicate with application of a shear stress, after said step of mixing said polymeric matrix with said filler constituted by layered silicate, the obtained mixture being dispersed in Milli-Q water in a concentration of 0,1% by weight; synthetic salt of quaternary ammonium, 0,03% by weight and synthetic resin of acrylic nature, 20% by weight are added to the mixture under vigorous stirring; the suspension is kept under stirring for 15 min and supplemented with 10-15% by weight of a mixture of mineral pigments.

2. Process according to claim 1, **characterised in that** said shear stress is applied by a processing of the type of melt processing.

3. Process according to claim 2, **characterised in that** said shear stress is applied by using an extruder.

## Patentansprüche

1. Verfahren zur Herstellung einer formbaren Kunststoffbeschichtung, **dadurch gekennzeichnet, dass** es einen Schritt vorsieht des Mischens einer Polymermatrix ausgewählt aus Polybutylenterephthalat (PBT) und Polyethylenterephthalat (PET) zusammen mit einem Füller bestehend aus geschichtetem Silikat mit einer Ausübung von Scherspannung nach dem Schritt des Mischens der Polymermatrix mit dem aus dem geschichteten Silikat bestehenden Füller, wobei die erhaltene Mischung aufgelöst wird in Milli-Q-Wasser mit einer Konzentration von 0,1 Gew.-%, wobei 0,03 Gew.-% eines synthetischen Salzes von quartärem Ammonium und 20 Gew.-% eines synthetischen Harzes von Acryl-Art der Mischung hinzugefügt werden unter kräftigem Umrühren, wobei die Suspension für 15 Minuten unter Umrühren gehalten wird und durch 10-15 Gew.-% einer Mischung von mineralischen Pigmenten ergänzt wird.

2. Verfahren gemäß Anspruch 1, **dadurch gekennzeichnet, dass** die Scherspannung ausgeübt wird durch eine Verarbeitung des Typs einer Schmelzverarbeitung.

3. Verfahren gemäß Anspruch 2, **dadurch gekennzeichnet, dass** die Scherspannung durch die Verwendung eines Extruders ausgeübt wird.

## Revendications

1. Procédé pour la fabrication d'un revêtement plastique apte au moulage, **caractérisé en ce qu'**il propose une étape de mélange d'une matrice polymère choisie parmi le polybutylène téréphtalate (PBT) et le polyéthylène téréphtalate (PET) conjointement avec un agent de charge constitué par un silicate lamellaire avec application d'une contrainte de cisaillement, après ladite étape de mélange de ladite matrice polymère avec ledit agent de charge constitué par le silicate lamellaire, le mélange obtenu étant dispersé dans de l'eau Milli-Q en une concentration de 0,1 % en poids ; un sel synthétique d'ammonium quaternaire, 0,03 % en poids et une résine synthétique de nature acrylique, 20 % en poids sont ajoutés au mélange en agitant vigoureusement ; on continue à agiter la suspension pendant 15 min et on la complète avec 10 à 15 % en poids d'un mélange de pigments minéraux.

2. Procédé selon la revendication 1, **caractérisé en ce que** ladite contrainte de cisaillement est appliquée par un traitement du type traitement à l'état fondu.

3. Procédé selon la revendication 2, **caractérisé en ce que** ladite contrainte de cisaillement est appliquée en utilisant une extrudeuse.
